# EUROPÄISCHE PATENTSCHRIFT

(11) **EP 4 527 179 B1**
(45) Veröffentlichungstag und Bekanntmachung des Hinweises auf die Patenterteilung: **14.10.2026**
(21) Anmeldenummer: 24190768.2
(22) Anmeldetag: 25.07.2024
(51) Int. Cl.: A01D 41/127

(54) **FEHLERERKENNUNG EINES HYDRAULISCHEN LINEARANTRIEBS**
ERROR DETECTION OF A HYDRAULIC LINEAR DRIVE
DÉTECTION DE DÉFAILLANCE D'UN ACTIONNEUR LINÉAIRE HYDRAULIQUE

(30) Priorität: 21.09.2023 DE 102023125574
(43) Veröffentlichungstag der Anmeldung: 26.03.2025
(73) Patentinhaber: CLAAS Selbstfahrende Erntemaschinen GmbH, 33428 Harsewinkel (DE)
(72) Erfinder: Lutterbeck, Dennis, 48291 Telgte (DE); Wielenberg, Andreas, 32049 Herford (DE); Heinze, Matthias, 33609 Bielefeld (DE); Beyer, Vincent, 01217 Dresden (DE)
(74) Vertreter: CLAAS Gruppe

(56) Entgegenhaltungen:
- EP-A1- 3 000 301
- EP-A1- 3 000 302
- EP-B1- 2 848 112
- EP-B1- 3 300 580
- GB-A- 2 606 740
- US-A1- 2014 000 230

## Beschreibung

Die Erfindung betrifft ein Verfahren zum Erkennen einer Fehlstellung eines hydraulischen Linearantriebs einer landwirtschaftlichen Arbeitsmaschine. Ein hydraulischer Linearantrieb kann eine Kolbenzylindereinheit umfassen. Derartige werden in landwirtschaftlichen Arbeitsmaschinen zum oszillierenden Antreiben verschiedener Arbeitsaggregate verwendet.

Eine landwirtschaftliche Arbeitsmaschine kann als selbstfahrender Mähdrescher ausgebildet sein, wobei ein Arbeitsaggregat der landwirtschaftlichen Arbeitsmaschine eine Streueinrichtung ist, die auch als sogenannter Radialverteiler bezeichnet wird. Die Streueinrichtung ist heckseitig am Mähdrescher angeordnet und umfasst wenigstens eine angetriebene Schleudereinrichtung, insbesondere zwei angetriebenen Schleudereinrichtungen, die ein Stroh-Spreu-Gemisch über die Arbeitsbreite des Mähdreschers verteilen. An jeder der Schleudereinrichtungen ist zur Lenkung des Gutstromes eine aus zumindest zwei teleskopisch verstellbaren Streublechen bestehende radiale Teilummantelung angeordnet, wobei die Streubleche über eine Verstelleinrichtung zueinander und in Bezug auf den jeweiligen Teilbereich eines Außenmantels der Schleudereinrichtung fortlaufend verstellbar sind. Zum Antreiben der Streubleche ist der Verstelleinrichtung ein Linearantrieb zugeordnet, der eine oszillierende Hub-Bewegung durchführt und mittels der Verstelleinrichtung die Streubleche antreibt.

Die Anordnung einer Vorrichtung zum Verteilen von Stroh ist von wesentlicher Bedeutung für den Betrieb des Mähdreschers. Im Hinblick auf die nach der Ernte durchzuführende Bodenbearbeitung ist es erforderlich, dass Stroh, sei es gehäckselt oder ungehäckselt, gleichmäßig über die abgeerntete Fläche zu verteilen, damit es gleichmäßig in den Boden eingearbeitet werden und dort verrotten kann. Ein Ausbilden von Strohnester, die durch eine ungleichmäßige Strohverteilung entstehen können, würden anderenfalls die Bodengare in erheblichem Umfang negativ beeinflussen.

Ein selbstfahrender Mähdrescher mit einer Streueinrichtung und einem hydraulischen Linearantrieb zum Antreiben der Streubleche ist aus der DE 10 2014 113 876 A1 bekannt. Für ein gutes Verteilbild der Streueinrichtung ist es notwendig, dass der Linearantrieb, welcher die Verstellung der Streubleche vornimmt, in allen Betriebspunkten einwandfrei funktioniert.

Defekte des Linearantriebs sowie Fehler in der Hydraulikölversorgung können zu einer Änderung des dynamischen Verhaltens des Linearantriebs führen und eine Verschlechterung des Verteilbildes bewirken. Diese Defekte sind bisher für den Kunden und den Kundendienst nur sehr schwer zu erkennen. Bisher wird aus dem Verteilbild und der Bewegung der Streubleche auf ein Fehlverhalten des Linearantriebs oder der Hydraulikölversorgung geschlossen. Ein Austausch der Komponenten erfolgt, sobald ein Verdacht auf einen Fehler besteht. Dadurch kann es passieren, dass funktionierende Linearantriebe frühzeitig getauscht werden oder defekte Linearantriebe nicht erkannt werden.

Weiterhin ist aus der US 2014/000230 A1 ein Verfahren zum Steuern eines Vorsatzgerätes einer selbstfahrenden Erntemaschine bekannt.

Es ist deshalb Aufgabe der Erfindung, die beschriebenen Nachteile des Standes der Technik zu vermeiden und insbesondere das Detektieren fehlerhafter Linearantriebe und/oder eines Fehlers des mit dem Linearantrieb in Wirkverbindung stehenden Hydrauliksystems zu vereinfachen.

Diese Aufgabe wird erfindungsgemäß durch die kennzeichnenden Merkmale des Anspruchs 1 gelöst.

Gemäß dem Anspruch 1 wird ein Verfahren zum Erkennen einer Fehlstellung eines hydraulischen Linearantriebs einer landwirtschaftlichen Arbeitsmaschine, insbesondere selbstfahrender Mähdrescher, vorgeschlagen, wobei der hydraulische Linearantrieb an ein Hydrauliksystem der landwirtschaftlichen Arbeitsmaschine angeschlossen ist und die landwirtschaftliche Arbeitsmaschine eine Steuereinrichtung umfasst, die ein Steuersignal zur Ansteuerung des hydraulischen Linearantriebs erzeugt, wobei aus dem Steuersignal ein modellbasierter Soll-Hub des hydraulischen Linearantriebs berechnet und mit einem Ist-Hub des hydraulischen Linearantriebs verglichen wird und dass in Abhängigkeit von dem Vergleichsergebnis der hydraulische Linearantrieb und/oder das Hydrauliksystem im Hinblick auf Fehler bewertet wird.

Die Erfindung hat viele Vorteile. Das Verfahren ermöglicht es fehlerhafte hydraulischen Lineareinheiten und/oder Hydrauliksysteme automatisch zu identifizieren. Ein Defekt der Lineareinheiten kann bereits erkannt werden, bevor dieser derart ausgeprägt ist, sodass dieser sich negativ auf den Betriebszustand der landwirtschaftlichen Arbeitsmaschine auswirkt. Ferner kann vermieden werden, dass noch funktionsfähige Lineareinheiten ausgetauscht werden.

Eine vorteilhafte Weiterbildung sieht vor, dass der Fehler aus der Differenz des Soll-Hubs und des Ist-Hubs berechnet wird. Aus einer Abweichung zwischen dem berechneten Soll-Hub und dem an der Lineareinheit eingestellten Ist-Hub lässt sich auf einfache Art und Weise auf einen Defekt an der hydraulischen Lineareinheit und/oder des Hydrauliksystems schließen.

Eine weitere vorteilhafte Weiterbildung sieht vor, dass in einem Zeitintervall mehrere Soll-Hub und Ist-Hub Zustände ermittelt werden und der jeweilige Fehler zwischen den jeweiligen Soll-Hub und Ist-Hub Zuständen bestimmt wird. Eine Betrachtung der innerhalb eines Zeitintervalls auftretenden Fehler zwischen den modellierten Soll-Hub Zuständen und den an dem Linearantrieb eingestellten Ist-Hub Zuständen ermöglicht Rückschlüsse auf eine Entwicklung des Fehlers. Um Rückschlüsse auf die Entwicklung des Fehlers zu treffen, wird der aufsummierte Fehler zumindest eines zweiten Zeitintervalls erfasst und der Fehler der zumindest zwei Zeitintervalle miteinander verglichen.

Eine weitere vorteilhafte Weiterbildung sieht vor, dass die jeweiligen Fehler zwischen den jeweiligen Soll-Hub und Ist-Hub Zuständen des Zeitintervalls quadratisch gewichtet und aufsummiert werden. Aufgrund der quadratischen Gewichtung gehen große Abweichungen stärker in die Berechnung ein. Weiterhin ermöglicht das Aufsummieren des Fehlers eine bessere Vergleichbarkeit der innerhalb verschiedener Zeitintervalle ermittelten Fehler.

Eine vorteilhafte Weiterbildung sieht vor, dass ein Hinweis ausgegeben wird, sobald der Fehler einen Schwellwert überschreitet. Ein derartiger Hinweis kann ein akustisches Signal oder das Anzeigen einer Fehlermeldung auf einem Display in einer Fahrerkabine der landwirtschaftlichen Arbeitsmaschine sein. Dieser Hinweis kann den Bediener der Arbeitsmaschine über einen Defekt an der hydraulischen Lineareinheit und/oder dem Hydrauliksystem informieren, sodass der Bediener ein Austauschen der Lineareinheit oder Reparaturen an dem Hydrauliksystem planen kann.

Eine vorteilhafte Weiterbildung sieht vor, dass der hydraulische Linearantrieb als doppeltwirkender Hydraulikzylinder ausgebildet ist.

Eine vorteilhafte Weiterbildung sieht vor, dass das Hydrauliksystem ein Wegeventil, vorzugsweise ein 3/2-Wegeventil, umfasst, wobei der hydraulische Linearantrieb über das Wegeventil betätigbar ist, wobei das Wegeventil zur Betätigung des hydraulischen Linearantriebs durch das Steuersignal angesteuert wird.

Eine vorteilhafte Weiterbildung sieht vor, dass das Wegeventil über einen Elektromagneten in eine erste Stellung und über mit einem Kolben oder mit einer Kolbenstange des Linearantriebs zusammenwirkenden Federmittels in eine zweite Stellung verschiebbar ist.

Eine vorteilhafte Weiterbildung sieht vor, dass das Steuersignal den Elektromagneten bestromt und vorzugsweise mittels der Bestromung des Elektromagneten eine Pendelkurve des Linearantriebs angesteuert wird.

Erfindungsgemäß ist vorgesehen, dass die landwirtschaftliche Arbeitsmaschine als selbstfahrender Mähdrescher ausgebildet ist und eine Streueinrichtung zum heckseitigen Auswerfen eines Stroh-Spreu-Gemisches umfasst, wobei die Streueinrichtung zumindest eine rotierend angetriebene Schleudereinrichtung umfasst und an der Schleudereinrichtung zur Lenkung eines Gutstromes eine aus zumindest zwei teleskopisch verstellbaren Streublechen bestehende radiale Teilummantelung angeordnet ist, wobei die Streubleche über eine Verstelleinrichtung verstellbar sind, wobei der Linearantrieb die Verstelleinrichtung oszillierend antreibt. Eine frühzeitige Fehlererkennung eines der Streueinrichtung zugeordneten Linearantriebs verhindert, dass der von der Streueinrichtung ausgetragene Gutstrom ungleichmäßig auf dem abgeernteten Untergrund ausgetragen wird. Das Erkennen fehlerhafter Schleudereinrichtung wird wesentlich erleichtert und ist losgelöst von den Erfahrungswerten eines Bedieners. Mithin kann ein gleichmäßiges Verteilbild des Ausgeworfenen Stroh-Spreu-Gemisches sichergestellt werden.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: als schematische Darstellung eine Heckansicht eines selbstfahrenden Mähdreschers, der am Bestand erntet und bei dem Stroh oder Strohhäcksel über eine Streueinrichtung in der abgeernteten Spur verteilt wird;
- Figur 2: eine Draufsicht auf die Unterseite einer Verstelleinrichtung von zwei einer Schleudereinrichtung zugeordneten Streublechen in einer Stellung, in welcher ein Stroh-Spreu-Gemisch in einen Randbereich der abgeernteten Fläche geleitet wird;
- Figur 3: eine Stellung der beiden Streublechs, in welcher das Stroh-Spreu-Gemisch, ausgehend vom Randbereich über eine breitere Fläche abgelegt wird;
- Figur 4: zwei aus Hydraulikzylindern umfassende Verstelleinrichtungen für die Streubleche;
- Figur 5: den Ablauf eines Verfahrens zum Erkennen einer Fehlstellung eines hydraulischen Linearantriebs.

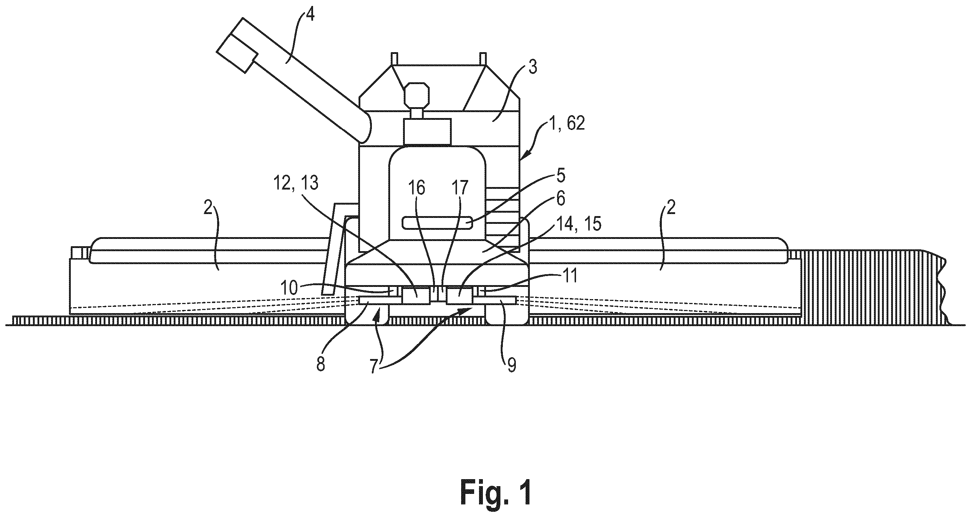

In der Figur 1 bezeichnet das Bezugszeichen 1 eine als selbstfahrender Mähdrescher 1 ausgebildete landwirtschaftliche Arbeitsmaschine 62, die im Frontbereich einen vorzugsweise austauschbaren Erntevorsatz 2 aufnimmt. Dieser Erntevorsatz 2 weist eine relativ große Arbeitsbreite auf und erstreckt sich somit beidseitig in erheblichem Maße über die Breite des Mähdreschers 1, also über die Breite von dessen Fahrwerk, Dreschwerk usw. Bei dem Erntevorsatz 2 handelt es sich im vorliegenden Fall um ein Schneidwerk zur Ernte von Getreide oder Raps. Ferner weist der Mähdrescher 1 in seinem mittleren Bereich, hinter einer nicht näher dargestellten Fahrerkabine einen Korntank 3 auf, von welchem ein als Korntankauslaufrohr 4 ausgebildetes Förderrohr an einer, in Fahrtrichtung gesehen, linken Längsseite des Mähdreschers 1 ausgeht. Dieses Korntankauslaufrohr 4 ist in die in der Figur 1 dargestellte Stellung für eine Entleerung des Korntanks 3 ausschwenkbar. Das Korntankauslaufrohr 4 kann außerdem in eine Transportstellung überführt werden, in der es parallel zur Längserstreckung des Mähdreschers 1 verläuft.

Während der Getreide- oder Rapsernte gelangen das Getreide oder Rapsstroh sowie die Spreu in einem am heckseitigen Ende des Mähdreschers 1 vorgesehenen Austritt 5, dem ein Strohhäcksler 6 nachgeordnet ist. Dieser häckselt das Stroh in kurze Teile und führt diese einer Streueinrichtung 7 zu. Diese Streueinrichtung 7 besteht im vorliegenden Fall aus zwei Schleudereinrichtungen 8 und 9, die über vertikal verlaufende Antriebswellen 10 und 11 gegenläufig angetrieben werden und in entsprechenden Aufnahmekonsolen des selbstfahrenden Mähdreschers 1 gelagert sind. Der gegenläufige Antrieb bedeutet dabei, dass die Schleudereinrichtung 8, in der Draufsicht gesehen, im Uhrzeigersinn rotiert und die Schleudereinrichtung 9 im Gegenuhrzeigersinn angetrieben wird.

Wie weiterhin aus der Figur 1 hervorgeht, sind die beiden Schleudereinrichtungen 8 und 9 jeweils über einen Teil ihres Außenmantels von verstellbaren Streublechen 12, 13, 14 und 15 abgedeckt, wodurch der aus einem Stroh-Spreu-Gemisch bestehende Gutstrom in den äußeren Bereich der abgeernteten Stoppelfläche lenkbar ist. Außerdem befindet sich in einem zwischen den beiden Schleudereinrichtungen 8 und 9 liegenden Bereich ein Guttrennblech 16, das den mittels zweier spitzwinklig zueinander verlaufender Trennwände 17 von dem Strohhäcksler 6 zugeführten Gutstrom auf die beiden Schleudereinrichtungen 8 und 9 aufteilt. Die beiden Streubleche 12, 13, 14 und 15 sind, wie nachfolgend noch anhand der weiteren Figuren dargelegt werden wird, verstellbar ausgebildet, so dass durch deren pendelnde Bewegung das zerkleinerte Stroh-Spreu-Gemisch gleichmäßig auf den Stoppeln abgelegt werden kann. Eine gleichmäßige Ablage ist unbedingt erforderlich, damit das Gemisch beim anschließenden Bodenbearbeitungsvorgang gleichmäßig in den Boden eingearbeitet werden kann und somit vermieden wird, dass sich im Boden Strohnester bilden.

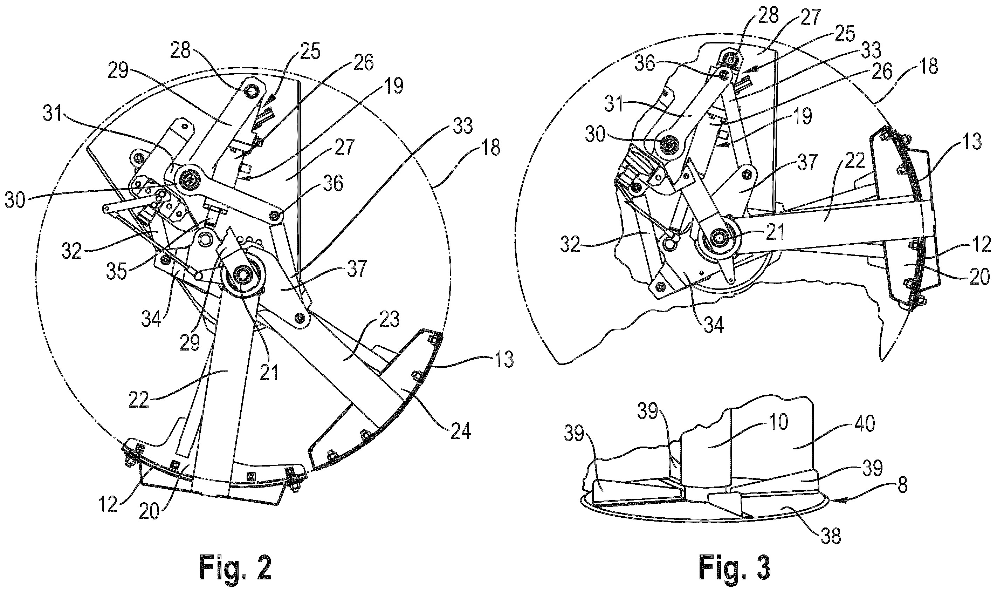

In den Figuren 2 und 3 ist als Beispiel durch einen strichpunktierten Kreis ein Außenmantel 18 der Schleudereinrichtung 8 dargestellt. Die nachfolgend beschriebene Anordnung und Verstellung der Streubleche 12 und 13 dieser Schleudereinrichtung 8 erfolgt mittels einer Verstelleinrichtung 19, wobei die Streubleche 12 und 13 sowohl ihre Lage zum Außenmantel 18 als auch zueinander verändern.

In der Figur 2 nehmen die Streubleche 12 und 13 eine Lage ein, in der sie soweit teleskopisch zueinander verstellt sind, dass sie einen maximalen Bereich des Außenmantels 18 umschließen. Außerdem nehmen sie zum Außenmantel 18 eine Lage ein, in der der Gutstrom primär in einen äußeren, also linken Bereich der abgeernteten Stoppelfläche geleitet wird. Demgegenüber überdecken sich die beiden Streubleche 12 und 13 nach der Figur 3 vollständig, wobei der Streubereich seine größte Breite aufweist. Die entsprechenden Verstellbewegungen werden als zyklische Pendelbewegung mit hoher Geschwindigkeit ausgeführt, um den Gutstrom gleichmäßig zu verteilen.

Jedes der Streubleche 12 und 13 ist gekrümmt ausgebildet und verläuft dabei konzentrisch zum Außenmantel 18. An einer Innenseite des Streublechs 12 befindet sich eine Konsole 20, an der ein auf einer Welle 21 gelagerter Schwenkhebel 22 angreift. In der gleichen Weise ist das Streublech 13 mit einem weiteren Schwenkhebel 23 versehen, der einerseits an deren Konsole 24 und andererseits ebenfalls an der Welle 21 angreift. Damit die beiden Schwenkhebel 22 und 23 unterschiedliche Schwenkbewegungen ausführen können und auch in eine überlappende oder identische Lage bringbar sind, verlaufen sie in axialer Richtung versetzt zueinander auf der Welle 21. Auch die beiden Konsolen 20 und 24 sind derart in axialer Richtung zueinander versetzt, dass sie sich aneinander vorbeibewegen können.

Ein Bestandteil der Verstelleinrichtung 19 ist ein hydraulischer Linearantrieb 25, der als Hydraulikzylinder 26 ausgebildet ist. Eine von einem Rahmenteil des selbstfahrenden Mähdreschers 1 oder des Strohhäckslers 6 ausgehende Traverse 27 nimmt sowohl die Welle 21 als auch ein ortsfestes Schwenklager 28 des Hydraulikzylinders 26 auf. Weiterhin greift sowohl an diesem ortsfesten Schwenklager 28 als an der Welle 21 ein Koppelelement 29 an, das über ein Schwenklager 30 einen zweiarmigen Hebel 31 aufnimmt. An den Enden dieses zweiarmigen Hebels 31 sind Koppelstangen 32 und 33 schwenkbar geführt, von denen die eine Koppelstange 32 schwenkbar mit einem ersten Hebel 34 verbunden ist, an dem eine Kolbenstange 35 des Hydraulikzylinders 26 angreift und der mit dem Schwenkhebel 23 verbunden ist. Die andere Koppelstange 33 ist über ein Gelenk 36 mit einem Ende des zweiarmigen Hebels 31 verbunden und greift an einem zweiten Hebel 37 an, der wiederum mit dem Schwenkhebel 22 verbunden ist. Somit ergibt sich insgesamt eine geometrisch als Parallelogramm ausgebildete Viergelenkkette, über die die beiden Schwenkhebel 22 und 23 und somit die Streubleche 12 und 13 zueinander unterschiedliche Schwenkbewegungen ausführen können, aus denen insgesamt eine teleskopische Umfangsverstellung resultiert.

Untenseitig in der Figur 3 ist eine Teilansicht einer möglichen Ausgestaltung der Schleudereinrichtung 8 dargestellt. Die Schleudereinrichtung weist demnach eine Schleuderscheibe 38 mit darauf angeordneten Mitnehmern 39 auf. Diese Schleuderscheibe 38 wird von der Antriebswelle 10 aufgenommen, wobei sich im rückwärtigen Bereich der entsprechenden Schleudereinrichtung 8 ein Leitblech 40 befindet, das beispielsweise einstückig mit dem vorgenannten Guttrennblech 16 ausgebildet sein kann. Die entsprechende Schleuderscheibe 38 rotiert und erfasst mit ihren Mitnehmern 39 das aus dem Strohhäcksler 6 austretende Stroh-Spreu-Gemisch und fördert dieses in einer im Wesentlichen horizontalen Ebene.

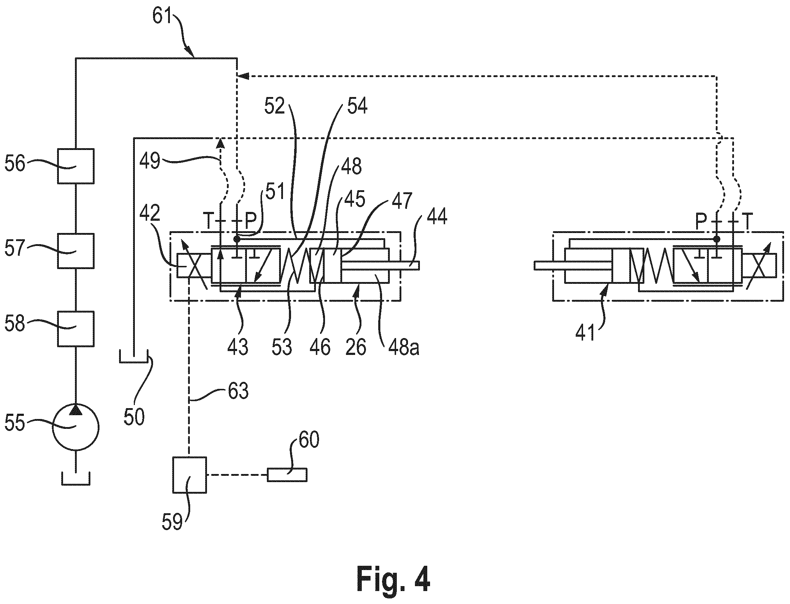

In der Figur 4 sind eine Ausbildung des Hydraulikzylinders 26 sowie eines weiteren Hydraulikzylinders 41, der der zuvor beschriebenen Schleudereinrichtung 9 zugeordnet sein soll, sowie ein diese beiden Hydraulikzylinder 26 und 41 mit Druckmittel versorgendes Hydrauliksystem 61 dargestellt. Beide Hydraulikzylinder 26 und 41 sind identisch ausgebildet, und deren Aufbau und Funktionsweise soll daher nur anhand des Hydraulikzylinders 26 erläutert werden.

Der Hydraulikzylinder 26 ist als elektrohydraulisch proportional ansteuerbare Verstelleinheit ausgebildet, welche mit diesem ein über einen Elektromagneten 42 steuerbares 3/2-Wegeventil 43 eine Einheit bilden soll. Der Hydraulikzylinder 26 ist doppeltwirkend, das heißt, ein mit einer Kolbenstange 44 verbundener Kolben 45 ist sowohl an einer Kreisfläche 46 als auch an einer Kreisringfläche 47 mit einem Arbeitsdruck beaufschlagbar. Wie dem gemeinsamen Symbol für den Hydraulikzylinder 26 und das 3/2-Wegeventil entnommen werden kann, ist in dessen erster Schaltstellung über einen Pumpenanschluss P nur die Kreisringfläche 47 mit einem Arbeitsdruck aus einem Konstantdrucksystem beaufschlagt, während die Kreisfläche 46 druckentlastet ist, so dass also eine Hydraulikflüssigkeit aus einem zylindrischen Druckraum 48, die durch die Kreisfläche 46 des Kolbens 45 begrenzt wird, drucklos über eine Tankleitung 49 in einen Tank 50 abfließt. In einer in der Figur 4 dargestellten zweiten Schaltstellung des 3/2-Wegeventils 43, in welche dieses mittels des Elektromagneten 42 bewegt wird, ist der Pumpenanschluss P über Leitungen 51 und 52 sowohl mit dem zylindrischen Druckraum 48 als auch mit einem der Kreisringfläche 47 des Kolbens 45 zugewandten ringförmigen Druckraum 48a verbunden. Da der Ventilschieber des 3/2-Wegeventils 43 über ein als Zugfeder 53 ausgebildetes Federmittel 54 an den Kolben 45 gekoppelt ist, wird beim Erreichen einer Endposition des Kolbens das 3/2-Wegeventil 43 wieder in seine erste Stellung verstellt.

Weiterhin geht aus der Figur 4 hervor, dass die aus dem 3/2-Wegeventil 43 und dem Hydraulikzylinder 26 bestehende Einheit an ein mit einem Konstantdruck betriebenes Hydrauliksystem 61 angeschlossen sein soll, das eine Pumpe 55 aufweist und zumindest weitere Verbraucher 56, 57 und 58 aufweist. Der Elektromagnet 42 wird außerdem über eine Steuereinrichtung 59 der landwirtschaftlichen Arbeitsmaschine 62 betätigt, die beispielsweise mit Sensoren 60, die die Streubreite ermitteln, verbunden ist. Die Steuereinrichtung 59 steuert den Linearantrieb 25 in Abhängigkeit von einer voreinstellbaren Pendelkurve an. Die von der Steuereinrichtung 59 erzeugten Steuersignale 63 bestromen den Elektromagneten 42. Die Pendelkurve wird durch den Verlauf der Bestromung beschrieben, mit welcher der Elektromagnet 42 bestromt wird. Die Auswahl unterschiedlicher Pendelkurven erlaubt eine einfache Anpassung an unterschiedliche Ernteverhältnisse. Hierzu sind die Pendelkurven in der Steuereinrichtung 59 hinterlegt und durch eine Bedienperson mittels einer Ein- und Ausgabeeinheit, die mit der Steuereinrichtung 59 verbunden ist, auswählbar. So kann beispielsweise eine Pendelkurve auswählbar sein, welche für das Einfahren und Ausfahren der durch den Linearantrieb oszillierend betätigten Pendelbleche gleich ist. Erreicht wird dies durch eine entsprechende Bestromung des Elektromagneten 42, wobei der Verlauf des Stroms beispielsweise sinusförmig ausgeprägt sein kann. Entsprechend dem sinusförmigen Strom wird der Linearantrieb 25 derart angesteuert, dass das Ausfahren des Hydraulikzylinders 26 dem sinusförmigen Verlauf des Stroms folgt.

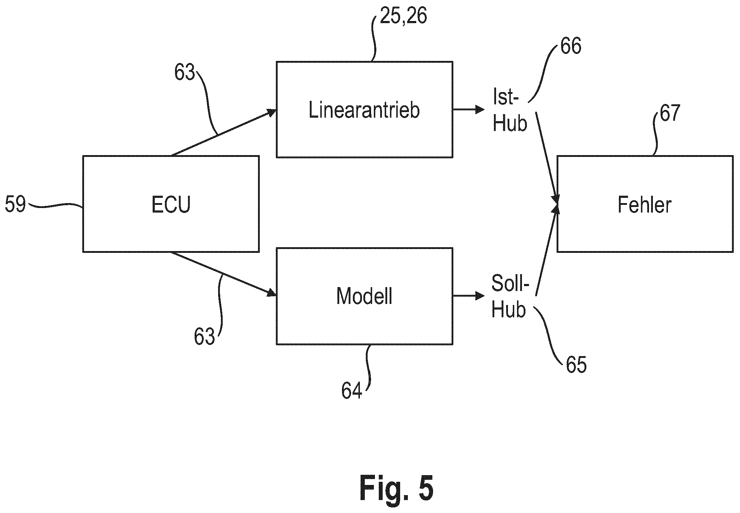

In Figur 5 ist der Ablauf eines erfindungsgemäßen Verfahrens zum Erkennen einer Fehlstellung des hydraulischen Linearantriebs 25 dargestellt. Eine Fehlstellung entspricht hierbei einer Abweichung des Ist-Hubs 66 des Kolbens 45 des hydraulischen Linearantriebs 25 von einem Soll-Hub 65, welche auf eine Fehlfunktion des Hydrauliksystems 61 oder des hydraulischen Linearantriebs 25 zurückzuführen ist. Zur Ermittlung der Fehlstellung werden die von der Steuereinrichtung 59 zur Ansteuerung des hydraulischen Linearantriebs 25 erzeugten Steuersignale 63 im laufenden Betrieb der landwirtschaftlichen Arbeitsmaschine 62 zusätzlich an ein Modell 64 übertragen. Das Modell 64 ist dazu vorgesehen und eingerichtet den Hubverlauf des hydraulischen Linearantriebs 25 zu simulieren. Das Modell 64 beschreibt das Soll-Verhalten des hydraulischen Linearantriebs 25 mittels mathematischer Gleichungen. Hierfür wird in dem in der Steuereinrichtung 59 hinterlegten Modell 64 ein theoretisch durch die Steuersignale 63 an dem Linearantrieb 25 anzufahrender Soll-Hub 65 berechnet. Der Soll-Hub 65 wird mit einem an dem Linearantrieb 25 eingestellten Ist-Hub 66 verglichen. Das Vergleichsergebnis beschreibt die Differenz zwischen Soll-Hub 65 und Ist-Hub 66. Eine Abweichung zwischen Soll-Hub 65 und Ist-Hub 66 entspricht einem Fehler 67 in der eingestellten Position des Kolbens 45 des Linearantriebs 25. In der Steuereinrichtung 59 wird die Differenz zwischen Soll-Hub 65 und Ist-Hub 66 berechnet. Eine zunehmende Differenz zwischen Soll-Hub 65 und Ist-Hub 66 weist auf einen Defekt an dem hydraulischen Linearantrieb 25 und/oder dem Hydrauliksystem 61 hin.

Sobald die Differenz zwischen Soll-Hub 65 und Ist-Hub 66 einen Schwellwert überschreitet, wird ein Hinweis an den Bediener der landwirtschaftlichen Arbeitsmaschine 62 ausgegeben. Dieser Hinweis kann beispielsweise eine Fehlermeldung auf einem Display in einer Fahrerkabine der Arbeitsmaschine 62 sein. Alternativ oder zusätzlich ist auch die Ausgabe eines akustischen Warnsignals möglich.

Hier und vorzugsweise werden in einem Zeitintervall mehrere Soll-Hub 65 und Ist-Hub 66 Zustände ermittelt und der Fehler 67 zwischen den jeweiligen Soll-Hub 65 und Ist-Hub 66 Zuständen berechnet. Ein Zeitintervall umfasst eine fest definierte Anzahl an Hubbewegungen des hydraulischen Linearantriebs 25. Innerhalb des Zeitintervalls werden die Fehler 67 zwischen den jeweiligen Soll-Hub 65 und Ist-Hub 66 Zuständen ermittelt, quadratisch gewichtet und anschließend aufsummiert. Die quadratische Gewichtung bewirkt, dass größere Abweichungen zwischen Soll-Hub 65 und Ist-Hub 66 stärker in die Aufsummierung eingehen. Die Betrachtung der innerhalb eines Zeitintervalls auftretenden Fehler 67 zwischen den modellierten Soll-Hub 65 Zuständen und den an dem Linearantrieb 25 eingestellten Ist-Hub 66 Zuständen ermöglicht Rückschlüsse auf eine Entwicklung des Fehlers. Um Rückschlüsse auf eine Entwicklung des Fehlers 67 zu treffen, wird der aufsummierte Fehler 67 zumindest zweier Zeitintervalle erfasst und miteinander verglichen.

### Bezugszeichenliste:

| | | | |
|---|---|---|---|
| 1 | Selbstfahrender Mähdrescher | 34 | Erster Hebel |
| 2 | Erntevorsatz | 35 | Kolbenstange von 26 |
| 3 | Korntank | 36 | Gelenk |
| 4 | Korntankauslaufrohr | 37 | Zweiter Hebel |
| 5 | Austritt | 38 | Schleuderscheibe |
| 6 | Strohhäcksler | 39 | Mitnehmer |
| 7 | Streueinrichtung | 40 | Leitblech |
| 8 | Schleudereinrichtung | 41 | Hydraulikzylinder |
| 9 | Schleudereinrichtung | 42 | Elektromagnet |
| 10 | Antriebswelle | 43 | 3/2-Wegeventil |
| 11 | Antriebswelle | 44 | Kolbenstange |
| 12 | Streublech | 45 | Kolben |
| 13 | Streublech | 46 | Kreisfläche |
| 14 | Streublech | 47 | Kreisringfläche |
| 15 | Streublech | 48 | zylindrischer Druckraum |
| 16 | Guttrennblech | 48a | ringförmiger Druckraum |
| 17 | Trennwände | 49 | Tankleitung |
| 18 | Außenmantel von 8 | 50 | Tank |
| 19 | Verstelleinrichtung | 51 | Leitung |
| 20 | Konsole | 52 | Leitung |
| 21 | Welle | 53 | Zugfeder |
| 22 | Schwenkhebel | 54 | Federmittel |
| 23 | Schwenkhebel | 55 | Pumpe |
| 24 | Konsole | 56 | Verbraucher |
| 25 | Linearantrieb | 57 | Verbraucher |
| 26 | Hydraulikzylinder | 58 | Verbraucher |
| 27 | Traverse | 59 | Steuereinrichtung |
| 28 | Ortsfestes Schwenklager | 60 | Sensor |
| 29 | Koppelelement | 61 | Hydrauliksystem |
| 30 | Schwenklager | 62 | Landwirtschaftliche Arbeitsmaschine |
| 31 | Zweiarmiger Hebel | 63 | Steuersignal |
| 32 | Koppelstange | 64 | Modell |
| 33 | Koppelstange | 65 | Soll-Hub |
| | | 66 | Ist-Hub |
| | | 67 | Fehler |

## Patentansprüche

1. Verfahren zum Erkennen einer Fehlstellung eines hydraulischen Linearantriebs (25) einer landwirtschaftlichen Arbeitsmaschine (62), insbesondere selbstfahrender Mähdrescher (1), wobei der hydraulische Linearantrieb (25) an ein Hydrauliksystem (61) der landwirtschaftlichen Arbeitsmaschine (62) angeschlossen ist und die landwirtschaftliche Arbeitsmaschine (62) eine Steuereinrichtung (59) umfasst, die ein Steuersignal (63) zur Ansteuerung des hydraulischen Linearantriebs (25) erzeugt, **dadurch gekennzeichnet, dass**
aus dem Steuersignal (63) ein modellbasierter Soll-Hub (65) des hydraulischen Linearantriebs (25) berechnet und mit einem Ist-Hub (66) des hydraulischen Linearantriebs (25) verglichen wird und dass in Abhängigkeit von dem Vergleichsergebnis der hydraulische Linearantrieb (25) und/oder das Hydrauliksystem im Hinblick auf einen Fehler (67) bewertet wird, die landwirtschaftliche Arbeitsmaschine (62) als selbstfahrender Mähdrescher (1) ausgebildet ist und eine Streueinrichtung (7) zum heckseitigen Auswerfen eines Stroh-Spreu-Gemisches umfasst, wobei die Streueinrichtung (7) zumindest eine rotierend angetriebene Schleudereinrichtung (8) umfasst und an der Schleudereinrichtung (8) zur Lenkung eines Gutstromes eine aus zumindest zwei teleskopisch verstellbaren Streublechen (12, 13, 14, 15) bestehende radiale Teilummantelung angeordnet ist, wobei die Streubleche (12, 13, 14, 15) über eine Verstelleinrichtung (19) verstellbar sind, wobei der hydraulische Linearantrieb (25) die Verstelleinrichtung (19) oszillierend antreibt.

2. Verfahren nach Anspruch 1, **dadurch gekennzeichnet, dass** der Fehler (67) aus der Differenz des Soll-Hubs (65) und des Ist-Hubs (66) berechnet wird.

3. Verfahren nach Anspruch 2, **dadurch gekennzeichnet, dass** in einem Zeitintervall mehrere Soll-Hub (65) und Ist-Hub (66) Zustände ermittelt werden und der jeweilige Fehler (67) zwischen den jeweiligen Soll-Hub (65) und Ist-Hub (66) Zuständen bestimmt wird.

4. Verfahren nach Anspruch 3, **dadurch gekennzeichnet, dass** die jeweiligen Fehler (67) zwischen den jeweiligen Soll-Hub (65) und Ist-Hub (66) Zuständen des Zeitintervalls quadratisch gewichtet und aufsummiert werden.

5. Verfahren nach einem der Ansprüche 1 bis 4, **dadurch gekennzeichnet, dass** ein Hinweis ausgegeben wird, sobald der Fehler (67) einen Schwellwert überschreitet.

6. Verfahren nach einem der Ansprüche 1 bis 5, **dadurch gekennzeichnet, dass** der hydraulische Linearantrieb (25) als doppeltwirkender Hydraulikzylinder (26) ausgebildet ist.

7. Verfahren nach einem der Ansprüche 1 bis 6, **dadurch gekennzeichnet, dass** das Hydrauliksystem (61) ein Wegeventil (43), vorzugsweise ein 3/2-Wegeventil (43), umfasst, wobei der hydraulische Linearantrieb (25) über das Wegeventil (43) betätigbar ist, wobei das Wegeventil (43) zur Betätigung des hydraulischen Linearantriebs (25) durch das Steuersignal (63) angesteuert wird.

8. Verfahren nach Anspruch 7, **dadurch gekennzeichnet, dass** das Wegeventil (43) über einen Elektromagneten (42) in eine erste Stellung und über mit einem Kolben (45) oder mit einer Kolbenstange (44) des hydraulischen Linearantriebs (25) zusammenwirkenden Federmittels (54) in eine zweite Stellung verschiebbar ist.

9. Verfahren nach Anspruch 8, **dadurch gekennzeichnet, dass** das Steuersignal (63) den Elektromagneten (42) bestromt und vorzugsweise mittels der Bestromung des Elektromagneten (42) eine Pendelkurve des hydraulischen Linearantriebs (25) angesteuert wird.

## Claims

1. Method for detecting an incorrect position of a hydraulic linear drive (25) of an agricultural working machine (62), in particular a self-propelled combine harvester (1), wherein the hydraulic linear drive (25) is connected to a hydraulic system (61) of the agricultural working machine (62), and the agricultural working machine (62) comprises a control device (59), which generates a control signal (63) for controlling the hydraulic linear drive (25),
**characterized in that**
a model-based setpoint stroke (65) of the hydraulic linear drive (25) is calculated from the control signal (63) and compared with an actual stroke (66) of the hydraulic linear drive (25), and **in that**, depending on the comparison result, the hydraulic linear drive (25) and/or the hydraulic system are/is evaluated with regard to a fault (67), the agricultural working machine (62) is designed as a self-propelled combine harvester (1) and comprises a spreader device (7) for rear-side ejection of a straw-chaff mixture, wherein the spreader device (7) comprises at least one rotationally driven spinning device (8), and a radial partial casing comprising at least two telescopically adjustable spreader plates (12, 13, 14, 15) is arranged at the spinning device (8) for steering a material flow, wherein the spreader plates (12, 13, 14, 15) are adjustable via an adjustment device (19), wherein the hydraulic linear drive (25) drives the adjusting device (19) in an oscillating manner.

2. Method according to Claim 1, **characterized in that** the fault (67) is calculated from the difference of the setpoint stroke (65) and the actual stroke (66).

3. Method according to Claim 2, **characterized in that** a plurality of setpoint stroke (65) and actual stroke (66) states are determined in a time interval, and the respective fault (67) between the respective setpoint stroke (65) and actual stroke (66) states is determined.

4. Method according to Claim 3, **characterized in that** the respective faults (67) between the respective setpoint stroke (65) and actual stroke (66) states of the time interval are quadratically weighted and summed.

5. Method according to one of Claims 1 to 4, **characterized in that** an indication is output as soon as the fault (67) exceeds a threshold value.

6. Method according to one of Claims 1 to 5, **characterized in that** the hydraulic linear drive (25) is designed as a double-acting hydraulic cylinder (26).

7. Method according to one of Claims 1 to 6, **characterized in that** the hydraulic system (61) comprises a directional valve (43), preferably a 3/2-way valve (43), wherein the hydraulic linear drive (25) can be actuated via the directional valve (43), wherein the directional valve (43) for actuating the hydraulic linear drive (25) is actuated by the control signal (63).

8. Method according to Claim 7, **characterized in that** the directional valve (43) can be moved via an electromagnet (42) into a first position and via spring means (54) which interact with a piston (45) or with a piston rod (44) of the hydraulic linear drive (25) into a second position.

9. Method according to Claim 8, **characterized in that** the control signal (63) energizes the electromagnet (42), and a pendulum curve of the hydraulic linear drive (25) is preferably actuated by means of the energization of the electromagnet (42).

## Revendications

1. Procédé de détection d'une mauvaise position d'un entraînement linéaire hydraulique (25) d'une machine de travail agricole (62), en particulier d'une moissonneuse-batteuse automotrice (1), l'entraînement linéaire hydraulique (25) étant raccordé à un système hydraulique (61) de la machine de travail agricole (62) et la machine de travail agricole (62) comprenant un dispositif de commande (59), qui génère un signal de commande (63) pour le pilotage de l'entraînement linéaire hydraulique (25), **caractérisé en ce que**
une course de consigne (65) basée sur un modèle de l'entraînement linéaire hydraulique (25) est calculée à partir du signal de commande (63) et est comparée à une course réelle (66) de l'entraînement linéaire hydraulique (25), et que l'entraînement linéaire hydraulique (25) et/ou le système hydraulique sont évalués en fonction du résultat de la comparaison en ce qui concerne la présence d'une erreur (67), la machine de travail agricole (62) est formée comme une moissonneuse-batteuse automotrice (1) et comprend un dispositif d'épandage (7) pour l'éjection côté arrière d'un mélange de paille-de glume, le dispositif d'épandage (7) comprenant au moins un dispositif centrifuge (8) entraîné en rotation et un enrobage partiel radial constitué d'au moins deux tôles d'épandage (12, 13, 14, 15) pouvant être ajustées de manière télescopique étant disposé sur le dispositif centrifuge (8) pour diriger un flux de produit, les tôles d'épandage (12, 13, 14, 15) pouvant être ajustées par un dispositif d'ajustement (19), l'entraînement linéaire hydraulique (25) entraînant en oscillation le dispositif d'ajustement (19).

2. Procédé selon la revendication 1, **caractérisé en ce que** l'erreur (67) est calculée à partir de la différence entre la course de consigne (65) et la course réelle (66).

3. Procédé selon la revendication 2, **caractérisé en ce que** plusieurs états de course de consigne (65) et de course réelle (66) sont déterminés dans un intervalle de temps et l'erreur (67) respective entre les états respectifs de course de consigne (65) et de course réelle (66) est déterminée.

4. Procédé selon la revendication 3, **caractérisé en ce que** les erreurs (67) respectives entre les états respectifs de course de consigne (65) et de course réelle (66) de l'intervalle de temps sont pondérées et additionnées de manière quadratique.

5. Procédé selon l'une des revendications 1 à 4, **caractérisé en ce qu'**une indication est délivrée dès que l'erreur (67) dépasse une valeur de seuil.

6. Procédé selon l'une des revendications 1 à 5, **caractérisé en ce que** l'entraînement linéaire hydraulique (25) est formé comme un vérin hydraulique à double action (26).

7. Procédé selon l'une des revendications 1 à 6, **caractérisé en ce que** le système hydraulique (61) comprend un distributeur (43), de préférence un distributeur à 3/2 voies (43), l'entraînement linéaire hydraulique (25) pouvant être actionné par le distributeur (43), le distributeur (43) étant piloté par le signal de commande (63) pour l'actionnement de l'entraînement linéaire hydraulique (25).

8. Procédé selon la revendication 7, **caractérisé en ce que** le distributeur (43) peut être coulissé dans une première position par un électroaimant (42) et dans une deuxième position par un moyen à ressort (54) coopérant avec un piston (45) ou avec une tige de piston (44) de l'entraînement linéaire hydraulique (25).

9. Procédé selon la revendication 8, **caractérisé en ce que** le signal de commande (63) alimente en courant l'électroaimant (42) et une courbe pendulaire de l'entraînement linéaire hydraulique (25) est pilotée de préférence au moyen de l'alimentation en courant de l'électroaimant (42).
